# EUROPÄISCHE PATENTANMELDUNG

(11) **EP 0 823 315 A1**
(43) Veröffentlichungstag der Anmeldung: **11.02.1998**
(21) Anmeldenummer: 97112835.0
(22) Anmeldetag: 25.07.1997
(51) Int. Cl.: B29B 13/02, B29B 11/16, B29C 70/50

(54) **Verfahren und Vorrichtung zum Erhitzen von faserverstärkten Thermoplasten mittels Kontaktwärmeeinrichtungen**

(30) Priorität: 07.08.1996 AT 1424/96
(71) Anmelder: PCD-Polymere Gesellschaft m.b.H., A-2323 Schwechat-Mannswörth (AT)
(72) Erfinder: Zopf, Ernst, 4222 St.Georgen (AT); Stadlbauer, Wolfram, Dipl.-Ing., 4040 Linz (AT); Blauhut, Wilfried, Dipl.-Ing., 4040 Linz (AT); Lehner, Manfred, 4061 Pasching (AT); Penz, Wolfgang, 4210 Unterweitersdorf (AT)
(74) Vertreter: Kunz, Ekkehard, Dr.

(57) **Zusammenfassung**

Verfahren und Vorrichtung zum Erhitzen von plattenförmigen, faserverstärkten Thermoplasten in Kontaktwärmeeinrichtungen, bei dem der Thermoplast zwischen Bändern im Raum zwischen zwei anpreßbaren Heizeinrichtungen erhitzt wird und dabei zwischen je einer oberen und einer unteren flächigen oder fadenförmigen Rückhalteeinrichtung gehalten wird, die jeweils zwischen Thermoplast und Band angeordnet ist. Nach dem Aufheizen wird der Thermoplast mit Rückhalteeinrichtungen und Bändern aus der Heizzone herausgeführt, wobei zunächst die Bänder vom Thermoplasten abgelöst werden, während die Rückhalteeinrichtungen weiter am Thermoplasten anliegen und anschließend die Rückhalteeinrichtungen vom Thermoplasten abgelöst werden.

## Beschreibung

Die Erfindung betrifft ein Verfahren zum Erhitzen von faserverstärkten Thermoplasten in Kontaktwärmeeinrichtungen sowie eine Vorrichtung zur Durchführung des Verfahrens.

Faserverstärkte, beispielsweise glasmattenverstärkte Thermoplaste liegen als Halbzeug zumeist in Plattenform vor. Zum Verarbeiten durch Pressen müssen diese Platten auf eine Temperatur erwärmt werden, die meist etwa 60 - 80 Grad über dem Schmelzpunkt der Thermoplaste liegt. Nach dem Stand der Technik wird dies üblicherweise in Infrarotöfen oder Heißluftöfen bewerkstelligt, d. h. die Wärme wird entweder durch Strahlung oder durch erzwungene Konvektion übertragen.

Nachteil der Erhitzung durch Strahlung ist örtliche Überhitzung von sich von der kompakten Oberfläche lösenden Fasern und daran anhaftender Matrix. Da die Strahlungsquelle meist mehrere 100 Grad heißer ist als der zu erhitzende faserverstärkte Thermoplast und da die Wärmeabfuhr von einer pelzigen Struktur in Richtung deren Basis schlecht ist, werden die Faserspitzen sehr heiß, ehe die gesamte Platte durchwärmt ist. Dabei wird der anhaftende Thermoplast geschädigt, unter Umständen sogar verdampft, was nachteilig für die Qualität der zu pressenden Teile ist. Weiters trägt zur Schädigung auch der Kontakt der heißen Teile mit der Umgebungsluft durch Oxidation bei.

Bei der Erhitzung in Umluftöfen wird das Problem örtlicher Überhitzung stark reduziert, dafür wird die Sauerstoffzufuhr erhöht und es entsteht besonders bei kleinen Teilen das Problem, daß diese durch zu intensive Luftströmung "verblasen" werden, was im Interesse eines störungsfreien Produktionsablaufes durch Begrenzung der Luftgeschwindigkeit, damit aber auch des Wärmeüberganges unter allen Umständen vermieden werden muß. Da zudem zwecks Vermeidung thermischer Schädigung des Gutes (des Thermoplasten) auch die Lufttemperatur auf einen Wert nicht viel höher als die zu erreichende Thermoplasttemperatur begrenzt wird, werden im allgemeinen lange Aufheizzeiten in der Größenordnung von 10 bis 15 Minuten benötigt. Bei kontinuierlicher Fertigung heißt das, der Umluftofen muß so groß sein, daß mehrere Zuschnitte gleichzeitig darin zum Aufheizen Platz haben.

Beiden Verfahren gemeinsam ist der Nachteil eines schlechten thermischen Wirkungsgrades, d. h. das Verhältnis von zugeführter Energie zu tatsächlich vom faserverstärkten Thermoplasten aufgenommener Energie ist unbefriedigend.

Zur Vermeidung dieser Probleme ist auch versucht worden, die erforderliche Wärme durch Wärmeleitung an die faserverstärkten Thermoplaste zu übertragen. Dies gelingt dadurch, daß der zu erhitzende faserverstärkte Thermoplast zwischen 2 Heizplatten gebracht wird, von denen mindestens eine beweglich angeordnet ist und die zum Erhitzen zusammengepreßt werden. Problematisch ist dabei die Entnahme des erhitzten faserverstärkten Thermoplasten aus einer derartigen Vorrichtung, da dieser intensiv an den Heizflächen haftet. Zur Lösung dieses Anhaftproblemes wurde bei Kontaktwärmeöfen versucht, den Thermoplasten nicht direkt mit den Heizplatten in Berührung zu bringen, sondern zwischen 2 möglichst dünnen, möglichst gut wärmeleitenden Bändern. Diese sind bei großtechnischen Ausführungen als umlaufende Bänder ausgeführt. Auch dabei läßt sich der Thermoplast nur sehr schwierig von den Bändern ablösen. Diese Bänder bestehen beispielsweise aus einem Glasgewebe, das mit Silikonen oder Fluorpolymeren, wie z.B. Polytetrafluorethylen (PTFE) beschichtet oder imprägniert ist. Sie können auch aus metallischen Werkstoffen, beispielsweise Stahl bestehen. Um den erhitzten Thermoplasten von den Bändern zu lösen, wird von J. Dykhoff und W. Michaeli (Kunststoff-Journal 5-92, Seiten 16-22) vorgeschlagen, die Bänder abzuschrecken. Der oberflächlich erstarrte Thermoplast läßt sich dann tatsächlich von den Bändern lösen. Der energetische Nachteil dieses Verfahrens ist offenkundig: Eine der beim Abschrecken dem Thermoplasten entzogene äquivalente Wärmemenge muß dem Thermoplasten anschließend zusätzlich wieder zugeführt werden, bzw. als erhöhte Temperatur gespeichert sein, beispielsweise muß sie dem Thermoplasten nach dem Abschrecken durch eine zusätzliche Heizeinrichtung, z.B. eine Strahlungsheizeinrichtung wieder zugeführt werden. Dabei ergeben sich zusätzlich zu den hohen Energieverlusten weitere wesentliche Nachteile. Beim Abschrecken muß die Wärme über die gesamte Fläche des Thermoplasten gleichmäßig und rasch entzogen werden, um gleichmäßiges Fließverhalten des fasterverstärkten Thermoplasten zu gewährleisten. Rasch und gleichmäßig widersprechen einander jedoch in der Praxis, sodaß die Temperaturgleichmäßigkeit des auf diese Weise einem Kontaktofen entnommenen erhitzten Thermoplasten unbefriedigend ist. Ein weiteres Problem ist, daß die abgeschreckte Oberfläche zu einer erhöhten Einlegersichtbarkeit im gepreßten Bauteil führt.

Aufgabe der vorliegenden Erfindung ist es, die Nachteile der bekannten Aufheizverfahren auszuschalten. Dies wird erfindungsgemäß dadurch erreicht, daß auf Ober- und Unterseite der zu erhitzenden faserverstärkten Thermoplaste zusätzlich zu den Bändern flächige bzw. fadenförmige Rückhalteeinrichtungen verwendet werden, die jeweils zwischen dem zu erhitzenden Thermoplasten und den Bändern angeordnet sind.

Gegenstand der Erfindung ist demnach ein Verfahren zum Erhitzen von plattenförmigen, faserverstärkten Thermoplasten in Kontaktwärmeeinrichtungen, bei dem der Thermoplast zwischen Bändern im Raum zwischen zwei anpreßbaren Heizeinrichtungen erhitzt wird, dadurch gekennzeichnet,
daß der Thermoplast zwischen je einer oberen und einer unteren flächigen bzw. fadenförmigen Rückhalteeinrichtung gehalten wird, die jeweils zwischen Thermoplast und Band angeordnet ist,
daß der Thermoplast gemeinsam mit den Rückhalteeinrichtungen und Bändern nach dem Aufheizen aus der Heizzone der Kontaktwärmeeinrichtung herausgeführt wird, wobei zunächst die Bänder vom Thermoplasten abgelöst werden, während die Rückhalteeinrichtungen weiter am Thermoplasten anliegen und
daß anschließend die Rückhalteeinrichtungen vom Thermoplasten abgelöst werden.

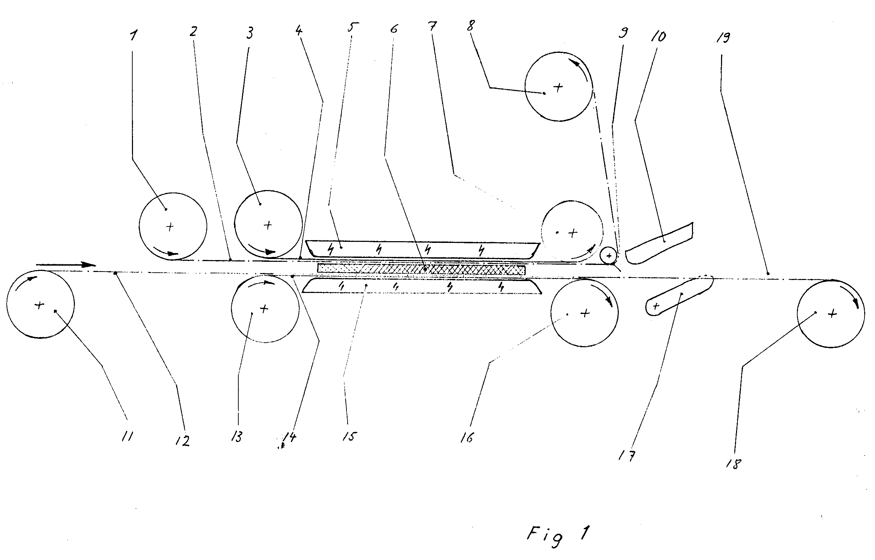

Nachdem der faserverstärkte Thermoplast erhitzt ist, wird zunächst der Anpreßdruck der Heizplatten weggenommen, eventuell wird auch der Spalt zwischen den Heizplatten vergrößert, anschließend werden Bänder, Rückhalteeinrichtungen und erhitzter faserverstärkter Thermoplast gemeinsam durch Bewegung in der Ebene des Thermoplasten aus der Heizzone geführt, wobei außerhalb der Heizzone zuerst beide Bänder durch Umlenken um eine Rolle oder Walze oder eine andere geeignete Einrichtung aus der Bewegungsebene entfernt und dadurch vom erhitzten faserverstärkten Thermoplasten gelöst werden, der seinerseits von den Rückhalteeinrichtungen in der Bewegungsebene gehalten wird. Anschließend werden die Rückhalteeinrichtungen aus der Bewegungsebene abgelenkt und dadurch vom faserverstärkten Thermoplasten abgelöst. Die Ablenkung erfolgt bevorzugt scharf, das heißt um einen kleinen Radius. Je nach Verhalten des faserverstärkten Thermoplasten kann dieses Ablösen gegebenenfalls durch Ablösehilfen, die an den Stellen, an denen die Rückhalteeinrichtungen den Thermoplasten nicht berühren, durch die Ebene der Rückhalteeinrichtung hindurch auf den Thermoplasten wirken, unterstützt werden. Das Ablösen der Rückhalteeinrichtungen kann gleichzeitig, das heißt geometrisch betrachtet in horizontaler Richtung an der gleichen Stelle oder, wie in Abb. 1 dargestellt, nacheinander erfolgen. In Abb. 1 erfolgt zuerst die Ablösung der oberen Rückhalteeinrichtung (2) im Bereich des Ablösepunktes (9) und dann die Ablösung der unteren Rückhalteeinrichtung (12) im Entnahmebereich (19) des erhitzten Thermoplasten durch Entnehmen des Thermoplasten.

Die Rückhalteeinrichtungen liegen flächig auf der Ober- und Unterseite des Thermoplasten auf und bestehen bevorzugt aus Scharen nebeneinander liegender Drähte, Litzen, Fäden oder Bändchen, die, solange sie am Thermoplasten anliegen, in derselben Richtung orientiert sind, in der der Thermoplast nach dem Erhitzen aus der Heizzone herausgeführt wird. Außerdem sind Rückhalteeinrichtungen aus Netzen, Gittern, Lochblechen oder Lochfolien möglich. Sie bestehen beispielsweise aus Metallen, wie z.B. Stahl, Kupfer, Nickel, Bronzen, oder aus duromeren oder thermoplastischen Kunststoffen, wie z.B. Harnstoff-, Melamin- oder Phenolharzen, Epoxiden, Polypropylen, Polyamiden, Polyimiden, Polyester, Polyetherketonen, Polyesterketonen, Polysulfiden, Polysulfonen, Aramiden. Die Rückhalteeinrichtungen können auch aus natürlichen Werkstoffen, wie z.B. Zellulose bestehen. Wesentlich ist, daß die Zersetzungstemperatur der natürlichen oder synthetischen duromeren Werkstoffe mindestens 10 ^{o}C höher liegt als die Erhitzungstemperatur des zu erhitzenden Thermoplasten, sowie daß im Falle der Verwendung von Rückhalteeinrichtungen aus thermoplastischen Werkstoffen deren Schmelzpunkt mindestens um 20 ^{o}C über der Erhitzungstemperatur des zu erhitzenden Thermoplasten liegt.

Das erfindungsgemäße Verfahren kann zum Erhitzen aller faserverstärkten Thermoplaste Verwendung finden. Beispiele von Thermoplasten sind Polyolefine, wie z. B. Polyethylene oder Polypropylene, Polyamide, Polyimide, Polyester, PVC, Polyetherketone, Polyesterketone, Polysulfide, Polysulfone.

Als Verstärkungsfasern sind beispielsweise Glasfasern, Kohlefasern, Aramidfasern, Metallfasern, Keramikfasern oder natürliche Fasern, wie z.B. Zellulose möglich. Die Fasern können sowohl als geschnittene oder endlose Fasern oder Faserbündel (Rovings) vorliegen, als auch als Matten, Vliese, Gewebe, Gelege oder Gewirke.

Ein weiterer Gegenstand der Erfindung ist eine Vorrichtung zur Durchführung des erfindungsgemäßen Verfahrens, bestehend aus einer oberen (5) und einer unteren (15) Heizplatte, einem oberen (4) und einem unteren (14) Band mit entsprechenden Walzen (3, 7, 13, 16) zum Zu- und Ablauf der Bänder, dadurch gekennzeichnet, daß oben und unten jeweils zwischen dem zu erhitzenden Thermoplasten (6) und den Bändern (4, 14) eine obere (2) und eine untere (12) Rückhalteeinrichtung angeordnet ist, die nach dem Aufheizen des Thermoplasten zusammen mit diesem und den Bändern aus der Heizzone zwischen den Heizplatten (5, 15) herausgeführt werden, und die beim Ablösen der Bänder (4, 14) vom Thermoplasten (6) diesen zurückhalten und anschließend ebenfalls vom Thermoplasten abgelöst werden. In einer bevorzugten Ausführungsform besitzt die Vorrichtung eine Entnahmezone (19) für den erhitzten Thermoplasten, die durch die untere Rückhalteeinrichtung (12) dadurch gebildet wird, daß der Ablösepunkt (9) der oberen Rückhalteeinrichtung (2) vor der Ablösung der unteren Rückhalteeinrichtung (12) liegt.

Die erfindungsgemäße Vorrichtung kann, so wie in Abb. 1 dargestellt, beispielsweise so ausgeführt werden, daß sowohl die Bänder, als auch die Rückhalteeinrichtungen von einer Abwickelposition, ausgeführt z.B. als drehbare Trommel oder Walze, zu einer ebenso ausgeführten Aufwickelposition gefördert werden. Es ist aber auch möglich, sowohl die Rückhalteeinrichtungen, als auch die Bänder endlos zu gestalten. Die Ab- und Aufwickeltrommeln werden dann zu Umlenktrommeln, von denen jeweils mindestens eine angetrieben sein muß. Zwischen Auf- und Abwickeltrommel können gegebenenfalls weitere Umlenkrollen angeordnet werden, ferner kann durch Spann- und Bahnführungseinrichtungen, wie sie nach dem Stand der Technik bekannt sind, für eine Optimierung der Spannung und des Laufes von Rückhalteeinrichtungen und Bändern gesorgt werden.

Zur Verdeutlichung der Erfindung ist eine bevorzugte Ausgestaltung der erfindungsgemäßen Vorrichtung in Fig. 1 im Längsschnitt dargestellt. Es bedeuten darin:
(1) die Abwickeltrommel für die obere Rückhalteeinrichtung (2), (3) die Abwickeltrommel für das obere Band (4), (5) die obere Heizplatte, (6) der zu erhitzende Thermoplast, (7) die Aufwickeltrommel für das obere Band, (8) die Aufwickeltrommel für die obere Rückhalteeinrichtung, (9) den Ablösepunkt der oberen Rückhalteeinrichtung, (10) eine obere Ablösehilfe für den erhitzten Thermoplasten, (11) die Abwickeltrommel für die untere Rückhalteeinrichtung (12), (13) die Abwickeltrommel für das untere Band (14), (15) die untere Heizplatte, (16) die Aufwickeltrommel für das untere Band, (17) eine untere Ablösehilfe für den erhitzten faserverstärkten Thermoplasten, (18) die Aufwickeltrommel für die untere Rückhalteeinrichtung, (19) die Position für die Entnahme des erhitzten Gutes.

### Beispiel

Es wurde eine Vorrichtung wie in Abb. 1 dargestellt, mit folgenden Abmessungen verwendet:
Durchmesser der Trommeln (1, 3, 7, 8, 11, 13, 16, 18): 50 mm
Bänder (4, 14): PTFE-imprägniertes Glasgewebe, 0,13 mm dick Rückhaltevorrichtungen (2, 12): Parallele Stahldrahtseile 1 mm Durchmesser, Teilung 12mm
Heizplatten (5, 15) 300 mm lang (in Transportrichtung), 200 mm breit je 1,5 kW
Umlenkradius der oberen Rückhalteeinrichtung (2) am Ablösepunkt (9): 5 mm keine Ablösehilfen (10, 17)
Faserverstärkter Thermoplast (6): Glasfaserverstärktes PP Type TCF-30 P240 BS 200 x 300 mm, 4,1 mm dick (Fa. PCD Polymere)

Der mit Raumtemperatur in die Vorrichtung eingebrachte faserverstärkte Thermoplast wurde mit einer Heizleistung von 2x 600 W innerhalb von 10 min auf 235 ^{o}C erhitzt. Die Anpreßkraft der oberen Heizplatte betrug 200 N. Nach 10 min wurde die obere Heizplatte abgehoben und durch gleichzeitiges Drehen an den Walzen (7, 8, 16, 18) in Pfeilrichtung, der heiße Thermoplast, die Bänder und Rückhalteeinrichtungen nach rechts (in Abb. 1) mit einer Geschwindigkeit von ca. 2 m/min transportiert. Sowohl beide Bänder, als auch die obere Rückhalteeinrichtung (Stahlseilschar) löste sich rückstandsfrei vom Thermoplasten, der ebenfalls rückstandsfrei aus der Entnahmeposition (19) von der unteren Rückhaltevorrichtung (12) abgenommen werden konnte.

## Patentansprüche

1. Verfahren zum Erhitzen von plattenförmigen, faserverstärkten Thermoplasten in Kontaktwärmeeinrichtungen, bei dem der Thermoplast zwischen Bändern im Raum zwischen zwei anpreßbaren Heizeinrichtungen erhitzt wird, dadurch gekennzeichnet,
daß der Thermoplast zwischen je einer oberen und einer unteren flächigen oder fadenförmigen Rückhalteeinrichtung gehalten wird, die jeweils zwischen Thermoplast und Band angeordnet ist,
daß der Thermoplast mit Rückhalteeinrichtungen und Bändern nach dem Aufheizen aus der Heizzone der Kontaktwärmeeinrichtung herausgeführt wird, wobei zunächst die Bänder vom Thermoplasten abgelöst werden, während die Rückhalteeinrichtungen weiter am Thermoplasten anliegen und
daß anschließend die Rückhalteeinrichtungen vom Thermoplasten abgelöst werden.

2. Verfahren gemäß Anspruch 1, dadurch gekennzeichnet daß die Rückhalteeinrichtungen Scharen nebeneinander liegender Drähte, Litzen, Fäden oder Bändchen sind, die, solange sie am Thermoplasten anliegen, in derselben Richtung orientiert sind, in der der Thermoplast nach dem Erhitzen aus der Heizzone herausgeführt wird.

3. Verfahren gemäß Anspruch 1, dadurch gekennzeichnet, daß die Rückhalteeinrichtungen Netze, Gitter, Lochbleche oder Lochfolien sind.

4. Verfahren gemäß einem der Ansprüche 1 bis 3, dadurch gekennzeichnet, daß die Rückhalteeinrichtungen aus metallischen Werkstoffen bestehen.

5. Verfahren gemäß einem der Ansprüche 1 bis 3, dadurch gekennzeichnet, daß die Rückhalteeinrichtungen aus natürlichen oder synthetischen duromeren Werkstoffen bestehen, deren Zersetzungstemperatur mindestens 10 K höher ist als die Erhitzungstemperatur des Thermoplasten.

6. Verfahren gemäß einem der Ansprüche 1 bis 3, dadurch gekennzeichnet, daß die Rückhalteeinrichtungen aus thermoplastischen Werkstoffen bestehen, deren Schmelzpunkt mindestens 20 K über der Erhitzungstemperatur des Thermoplasten liegt.

7. Verfahren gemäß einem der Ansprüche 1 bis 6, dadurch gekennzeichnet, daß die Rückhalteeinrichtungen nacheinander vom Thermoplasten abgelöst werden.

8. Verfahren gemäß einem der Ansprüche 1 bis 6, dadurch gekennzeichnet, daß die Rückhalteeinrichtungen gleichzeitig vom Thermoplasten abgelöst werden.

9. Vorrichtung zur Durchführung des Verfahrens gemäß einem der Ansprüche 1 bis 8, bestehend aus einer oberen (5) und einer unteren (15) Heizplatte, einem oberen (4) und einem unteren (14) Band mit entsprechenden Walzen (3, 7, 13, 16) zum Zu- und Ablauf der Bänder, dadurch gekennzeichnet, daß oben und unten jeweils zwischen dem zu erhitzenden Thermoplasten (6) und den Bändern (4, 14) eine obere (2) und eine untere (12) Rückhalteeinrichtung angeordnet ist, die nach dem Aufheizen des Thermoplasten zusammen mit diesem und den Bändern aus der Heizzone zwischen den Heizplatten (5, 15) herausgeführt werden, und die beim Ablösen der Bänder (4, 14) vom Thermoplasten (6) diesen zurückhalten und anschließend ebenfalls vom Thermoplasten abgelöst werden.

10. Vorrichtung zur Durchführung des Verfahrens gemäß einem der Ansprüche 1 bis 7, dadurch gekennzecihnet, daß die untere Rückhalteeinrichtung (12) nach dem Ablösepunkt (9) der oberen Rückhalteeinrichtung (2) eine Entnahmezone (19) für den erhitzten Thermoplasten bildet.
